Europäisches Patentamt

(19) European Patent Office

Office européen des brevets

(11) Veröffentlichungsnummer : **0 133 486
B1**

(12) **EUROPÄISCHE PATENTSCHRIFT**

(45) Veröffentlichungstag der Patentschrift :
16.06.87

(21) Anmeldenummer : **84108302.5**

(22) Anmeldetag : **14.07.84**

(51) Int. Cl.⁴ : **G 01 N 27/56**

(54) **Gasmessfühler.**

(30) Priorität : **03.08.83 DE 3327991**

(43) Veröffentlichungstag der Anmeldung :
**27.02.85 Patentblatt 85/09**

(45) Bekanntmachung des Hinweises auf die Patenterteilung : **16.06.87 Patentblatt 87/25**

(84) Benannte Vertragsstaaten :
**DE FR GB IT NL SE**

(56) Entgegenhaltungen :
**DE-A- 2 838 122
DE-A- 3 237 628
FR-A- 2 396 292
GB-A- 2 017 926**

(73) Patentinhaber : **ROBERT BOSCH GMBH
Postfach 50
D-7000 Stuttgart 1 (DE)**

(72) Erfinder : **Frey, Thomas Dr. Dipl.-Ing.
Falkenstrasse 21
D-7251 Friolzheim (DE)**
Erfinder : **Grünwald, Werner, Dr. Dipl.-Phys.
Robert-Schuman-Strasse 21
D-7016 Gerlingen (DE)**
Erfinder : **Knoll, Günther
Brahmsweg 35
D-7000 Stuttgart 1 (DE)**
Erfinder : **Weyl, Helmut, Dipl.-Ing.
Peter-von-Koblenz-Strasse 34
D-7141 Schwieberdingen (DE)**

## Beschreibung

### Stand der Technik

Die Erfindung geht aus von einem Gasmeßfühler nach der Gattung des Anspruchs 1. Es ist schon ein derartiger Gasmeßfühler bekannt (DE-U-81 01 584), bei dem im Innenraum seines Sensorelementes ein stabförmiges, elektrisches Heizelement eingebaut ist ; bei diesem Gasmeßfühler ist der innere, durch das Heizelement und dessen elektrische Verbindungen beeinflußter Aufbau aber sehr kompliziert und demzufolge teuer.

### Vorteile der Erfindung

Der erfindungsgemäße Gasmeßfühler mit den Merkmalen des Anspruchs 1 hat demgegenüber den Vorteil, daß sein innerer Aufbau einfach gestaltet, demzufolge auch problemloser montierbar und deshalb insgesamt billiger ist.

Als weiterer Vorteil ist anzusehen, daß die erfindungsgemäße Ausführungsform des Gasmeßfühlers schüttelfester ist als der unter dem Abschnitt « Stand der Technik » genannte Gasmeßfühler.

Durch die in den Unteransprüchen aufgeführten Maßnahmen sind vorteilhafte Weiterbildungen und Verbesserungen des im Hauptanspruch angegebenen Gasmeßfühlers möglich ; besonders vorteilhaft ist es, diese Ausführungsform eines Gasmeßfühlers bei solchen Sauerstoffmeßfühlern zu verwenden, deren innere Bauteile mittels axial wirkendem Federdruck zusammenzuhalten bzw. elektrisch miteinander zu verbinden sind.

### Zeichnung

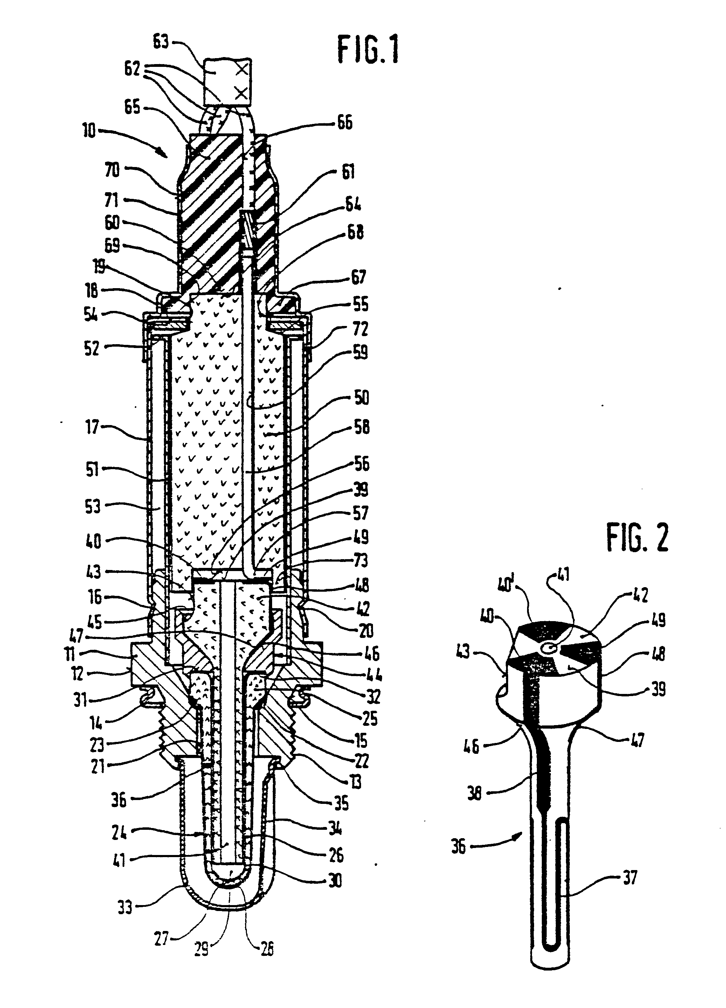

Ein Ausführungsbeispiel der Erfindung ist in der Zeichnung dargestellt und in der nachfolgenden Beschreibung näher erläutert ; es zeigen Figur 1 einen Längsschnitt durch einen erfindungsgemäßen Gasmeßfühler in vergrößerter Darstellung und Figur 2 eine perspektivische, noch weiter vergrößerte Darstellung des Heizelementes (ohne elektrische Isolierschicht) aus dem Gasmeßfühler gemäß der Figur 1.

### Beschreibung des Ausführungsbeispiels

Der in den Figuren 1 und 2 der Zeichnung dargestellte Gasmeßfühler 10 hat ein metallisches Gehäuse 11, das an seiner Außenseite ein Schlüsselsechskant 12 und ein Gewinde 13 als Befestigungsmittel für den Einbau in ein nicht dargestelltes Meßgasrohr aufweist ; für den abdichtenden Einbau dieses Gehäuses 11 in dem Meßgasrohr dient ein ringförmiges Dichtelement 14, das in einer zwischen Schlüsselsechskant 12 und Gewinde 13 angeordneten Ringnut 15 unverlierbar festgelegt ist. Auf dem meßgasfernen Endabschnitt des Gehäuses 11 ist noch eine Ringnut 16 eingearbeitet, die zur Festlegung einer das Gehäuse 11 verlängernden Verschlußhülse 17 dient ; diese Verschlußhülse 17, welche meßgasfern einen Boden 18 mit einer zentralen Öffnung 19 hat, ist mittels mehrerer Einprägungen 20 in der Ringnut 16 festgelegt.

Das Gehäuse 11 hat eine Längsbohrung 21 mit einer Schulter 22, die der Meßseite des Gasmeßfühlers 10 abgewendet ist und ein ringförmiges Dichtelement 23 trägt. Auf dieser mit dem Dichtelement 23 versehenen Schulter 22 der Gehäuse-Längsbohrung 21 liegt ein Sensorelement 24 mit seinem Kopf 25 auf.

Dieses Sensorelement 24 ist im vorliegenden Beispiel ein an sich bekannter Sauerstoffmeßfühler, wie er aus der DE-U-81 01 584 bekannt ist, und der bevorzugterweise für das Messen des Sauerstoffpartialdruckes in Abgasen von Brennkraftmaschinen Verwendung findet. Dieses Sensorelement 24 hat ein Festelektrolytrohr 26, dessen meßgasseitiger Endabschnitt mittels eines Bodens 27 verschlossen ist, das auf seiner dem Meßgas ausgesetzten Außenseite eine schichtförmige, gasdurchlässige Meßelektrode 28 und auf seiner dem Innenraum 29 zugewendeten Seite eine einem Referenzgas (z. B. Luft) ausgesetzte, gasdurchlässige und schichtförmige Bezugselektrode 30 trägt. Während die Meßelektrode 28 über das ringförmige Dichtelement 23 mit dem elektrisch an Masse liegenden Gehäuse 11 in Berührung steht, führt die Bezugselektrode 30 bevorzugterweise von der Innenseite des Bodens 27 bis auf die meßgasferne Stirnfläche 31 des Festelektrolytrohres 26 ; der flächenhafte Anschlußbereich der Bezugselektrode 30 auf der meßgasfernen Stirnfläche 31 des Festelektrolytrohres 26 ist mit 32 bezeichnet. Zur Erhöhung der Lebensdauer der zumeist aus einer dünnen Platinschicht bestehenden Meßelektrode 28 ist diese mit einer gasdurchlässigen (nicht dargestellten) Schutzschicht überzogen, die beispielsweise aus Magnesiumspinell bestehen kann.

Der meßgasseits aus der Längsbohrung 21 des Gehäuses 11 herausragende Abschnitt des Sensorelementes 24 ist mit Abstand von einem Schutzrohr 33 umgeben, welches für den Ein- bzw. Austritt von Meßgasen Öffnungen 34 besitzt und am meßgasseitigen Ende des Gehäuses 11 durch eine Bördelung 35 oder ein anderes bekanntes Mittel festgelegt ist ; dieses Schutzrohr 33 dient dazu, daß im Meßgas auftretende hohe Temperaturwechsel und im Meßgas enthaltene Partikel nicht direkt auf das Sensorelement 24 einwirken und zu Schäden daran führen.

Der Innenraum 29 des Sensorelementes 24 ist im wesentlichen durch ein stabförmiges, elektrisches Heizelement 36 ausgefüllt, welches aber auch meßgasfern noch aus dem Innenraum 29 des Sensorelementes 24 herausragt ; dieses elektrische Heizelement 36 weist an seinem meßgasseitigen Endabschnitt leiterbahnartige Heizwindungen 37 auf, welche aus einem geeigneten Material (z. B. Platin, Wolfram) bestehen, und dafür sorgen, daß der aus dem Gehäuse 11 herausragende, dem eigentlichen Meßvorgang dienende Abschnitt des Sensorelementes 24 damit beheizt wird. Diese Heizwindungen 37 sind über Leiterbahnen 38 mit der meßgasfernen Stirnfläche 39 elektrisch verbunden und bilden hier elektrisch voneinander getrennte, weitere flächenhafte Anschlußbereiche 40 bzw. 40'. Die Heizwindungen 37 und die Leiterbahnen 38 sind von einer dünnen Elektroisolierung (nicht dargestellt) bedeckt, die beispielsweise aus Aluminiumoxid bestehen kann. — Dieses Heizelement 36 ist noch mit einer Axialbohrung 41 versehen, die den Zutritt des Referenzgases Luft zur Bezugselektrode 30 des Sensorelementes 24 erleichtert, und es weist an seinem meßgasfernen Endabschnitt einen Kopf 42 mit einer seitlichen Fixierfläche 43 auf. Als tragendes Material des Heizelementes 36 dient bevorzugt Keramik, z. B. Aluminiumoxid. — Heizelemente, auf deren Oberfläche Heizwindungen durch Drucktechnik oder ähnliches aufgebracht und mittels dünnen Elektroisolierschichten abgedeckt sind, sind bereits aus der US-A-4 035 613 bekannt.

Auf der meßgasfernen Stirnfläche 31 des Sensorelementes 24 liegt ein ringförmiges Verbindungselement 44 auf, welches elektrisch leitfähig ist und das Heizelement 36 unterhalb seines Kopfes 42 koaxial umgibt ; die Mittelbohrung 45 des elektrischen Verbindungselementes 44 ist dem meßseitigen Absatz 46 des Heizelement-Kopfes 42 in der Form angepaßt. Mittels dieses elektrischen Verbindungselementes 44 ist eine elektrische Verbindung zwischen dem Anschlußbereich 32 der Bezugselektrode 30 und einem ersten Anschlußbereich 47 auf dem Absatz 46 des Heizelement-Kopfes 42 hergestellt ; dieser erste Anschlußbereich 47 ist flächenhaft ausgebildet und kann beispielsweise von einer Platinschicht gebildet sein. Von diesem ersten Anschlußbereich 47 führt eine Leiterbahn 48 bis auf die meßgasferne Stirnfläche 39 des Heizelementes 36 und bildet hier einen zweiten flächenhaften Anschlußbereich 49 ; dieser zweite Anschlußbereich 49 hält Abstand zu den weiteren Anschlußbereichen 40 und 40', welche über Leiterbahnen 38 mit den Heizwindungen 37 elektrisch in Verbindung stehen. Die Leiterbahn 48, welche den ersten Anschlußbereich 47 mit dem zweiten Anschlußbereich 49 verbindet, kann mit einer dünnen Elektroisolierschicht aus einem bekannten Material (z. B. Aluminiumoxid) abgedeckt sein.

In dem im wesentlichen von der meßgasfernen Stirnfläche 39 des Heizelementes 36, dem Gehäuse 11 und der Verschlußhülse 17 begrenzten Raum ist ein Isolierteil 50 untergebracht, welches bevorzugt aus einem keramischen Material (z. B. Aluminiumoxid) besteht und mittels einer Führungshülse 51 koaxial im Gasmeßfühler 10 gehalten ist. Diese Führungshülse 51 ist meßgasseits in der Längsbohrung 21 des Gehäuses 11 festgelegt (z. B. durch Einpressen, Verstemmen, Löten) und hat an ihrem meßgasfernen Ende einen nach außen weisenden Flansch 52, der seitlich bis etwa an die Verschlußhülse 17 reicht ; der zwischen dieser Führungshülse 51 und der Verschlußhülse 17 gebildete Ringraum 53 wirkt als Barriere gegenüber Feuchtigkeit, die im Bereich zwischen dem meßgasseitigen Endabschnitt der Verschlußhülse 17 und dem Gehäuse 11 mit der als Referenzgas dienenden Luft in den Gasmeßfühler 10 eintreten kann. Zwischen dem Flansch 52 der Führungshülse 51 und dem Boden 18 der Verschlußhülse 17 ist ein ringförmiges Federelement 54 (Tellerfeder) angeordnet, das sich einerseits an dem Boden 18 der Verschlußhülse 17 abstützt und andererseits unter mechanischer Vorspannung auf einer von der Meßseite des Gasmeßfühlers 10 wegweisenden, koaxialen Schulter 55 des Isolierteils 50 aufliegt. Infolge der mechanischen Vorspannung des Federelementes 54 wird das Isolierteil 50 mit seiner meßgasseitigen Stirnfläche 56 in Richtung auf die meßgasferne Stirnfläche 39 des Heizelementes 36 gedrückt und preßt demzufolge je ein elektrisches Verbindungsteil 57 auf die drei flächenhaften Anschlußbereiche 40, 40' und 49 auf der meßgasfernen Stirnfläche 39 des Heizelementes 36. Diese elektrischen Verbindungsteile 57 sind in bevorzugter Weise abgebogene Endabschnitte von Leiterdrähten 58, welche in Längsbohrungen 59 im Isolierteil 50 entlangführen. Die meßgasfernen Endabschnitte dieser Leiterdrähte 58 ragen meßgasfern ein kurzes Stück aus dem Isolierteil 50 heraus ; die meßgasferne Stirnfläche des Isolierteils 50 ist mit 60 bezeichnet. Auf jeden meßgasfern aus dem Isolierteil 50 herausragenden Endabschnitt eines Leiterdrahtes 58 ist eine Verbindungshülse 61 aufgeschoben und mittels eines bekannten Verfahrens festgelegt (Verquetschen, Verlöten, Verschweißen) ; infolgedessen, daß die Verbindungshülsen 61 meßgasseits auf der Stirnfläche 60 aufstehen, sind die Leiterdrähte 58 mit ihren elektrischen Verbindungsteilen 57 im Isolierteil 50 fixiert. Die meßgasfernen Endabschnitte der Verbindungshülsen 61 umfassen die abisolierten Endabschnitte der Anschlußdrähte 62 eines Anschlußkabels 63. Die abisolierten, meßgasseitigen Endabschnitte der Anschlußdrähte 62 sind in den Verbindungshülsen 61 durch Verquetschen, Verschweißen und/oder Verlöten befestigt.

Außer den Verbindungshülsen 61 steht auf der meßgasfernen Stirnfläche 60 des Isolierteils 50 die meßgasseitige Stirnfläche 64 eines elastischen Isolierstopfens 65 auf, durch dessen längs verlaufende Durchgangsbohrungen 66 die Anschlußdrähte 62 einschließlich der Verbindungshülsen 61 abgedichtet führen. Meßgasseits ist dieser Isolierstopfen 65 mit einem Flanschteil 67 ausgestattet, dessen meßgasseitige Endfläche 68 auf der Außenseite des Verschlußhülsen-Bodens 18 abdichtend aufsteht ; die meßgasseitige Stirnfläche 64 des Isolierstopfens 65 ist dabei in bevorzugter Weise in einer koaxialen Aussparung 69 des Flanschteils 67 angeordnet, welche den meßgasfernen Endabschnitt des Isolierteils 50

aufnimmt. Auf der Mantelfläche 70 dieses Isolierstopfens 65 ist eine rohrförmige, vorzugsweise metallische Kopfhülse 71 angeordnet, die mit ihrem aufgeweiteten, meßgasseitigen Endabschnitt eng über den meßgasfernen Endabschnitt der Verschlußhülse 17 greift und an dieser Verschlußhülse 17 mittels einiger Schweißpunkte 72 oder anderer bekannter Befestigungsmittel festgelegt ist und den Isolierstopfen 65 in Längsrichtung des Gasmeßfühlers 10 unter mechanischer Vorspannung hält.

Um zwischen den Anschlußbereichen 40, 40' und 49 auf der meßgasfernen Stirnfläche 39 des Heizelementes 36 und den elektrischen Verbindungsteilen 57 einschließlich ihrer Leiterdrähte 58 die lagerichtige Anordnung zu gewährleisten, ist an der meßseitigen Stirnfläche 56 des Isolierteils 50 ein ringförmiger Vorsprung 73 mit angeformt ; dieser ringförmige Vorsprung 73 umfaßt seitlich einen Teil des Kopfes 42 vom Heizelement 36 und liegt dabei zur Erzielung des lagerichtigen Zusammenbaus auch an der Fixierfläche 43 des Heizelement-Kopfes 42 an. Mindestens eines der elektrischen Verbindungsteile 57 kann zusätzlich noch in eine (nicht dargestellte) Nute bzw. Vertiefung der meßgasfernen Heizelement-Stirnfläche 39 und eventuell auch in der meßseitigen Isolierteil-Stirnfläche 56 angeordnet sein und somit auch der Fixierung dienen.

Bei bestimmten Ausführungsformen des beschriebenen Gasmeßfühlers 10 kann auf das Verbindungselement 44 verzichtet werden ; in diesem Falle werden die Anschlußbereiche 32 und 47 bevorzugt etwas größer und/oder dicker als beim beschriebenen Gasmeßfühler 10 gestaltet.

## Patentansprüche

1. Gasmeßfühler, insbesondere Gasmeßfühler (10) zur Bestimmung des Sauerstoffgehaltes in Abgasen von Brennkraftmaschinen, mit einem Gehäuse (11), das Befestigungsmittel (12, 13) für den Einbau in eine Meßgasleitung besitzt, außerdem an seinem meßgasfernen Endabschnitt ein vorzugsweise hülsenförmiges Verschlußteil (17) aufweist und eine Längsbohrung (21) hat, die mit ihrem meßgasseitigen Endabschnitt mindestens einen Längsabschnitt eines rohrförmigen, meßgasseits mit einem Boden (27) verschlossenen Sensorelementes (24) fest und abdichtend umgibt, wobei im Innenraum des Sensorelementes (24) ein stabförmiges, elektrisches Heizelement (36) angeordnet ist und sich mindestens ein flächenhafter Anschlußbereich (32) einer Bezugselektrode (30) auf einer Stirnfläche (31) des Sensorelementes (24) befindet, die der Meßseite des Gasmeßfühlers (10) abgewendet ist, wobei der flächenhafte Anschlußbereich (32) der Bezugselektrode (30) wie auch das stabförmige Heizelement (36) mit einem meßgasfern am Gasmeßfühler (10) angebrachten Anschlußkabel (63) elektrisch in Verbindung stehen, dadurch gekennzeichnet, daß das stabförmige, elektrische Heizelement (36) im Bereich seines meßgasfernen Endabschnitts einen zur Meßseite des Gasmeßfühlers (10) weisenden Absatz (46) mit einem ersten flächenhaften Anschlußbereich (47) hat, der direkt oder indirekt auf den mindestens einen flächenhaften Anschlußbereich (32) der Bezugselektrode (30) auf der meßgasfernen Stirnfläche (31) des Sensorelementes (24) gedrückt und demzufolge mit diesem elektrisch verbunden ist, und daß der erste auf dem Heizelement (36) befindliche flächenhafte Anschlußbereich (47) über eine Leiterbahn (48) mit einem zweiten flächenhaften Anschlußbereich (49) elektrisch verbunden ist, welcher auf einer von der Meßseite des Gasmeßfühlers (10) wegweisenden Stirnfläche (39) des stabförmigen Heizelementes (36) angeordnet ist, und daß weitere flächenhafte Anschlußbereiche (40, 40') des stabförmigen, elektrischen Heizelementes (36) auf mindestens einer von der Meßseite des Gasmeßfühlers (10) wegweisenden Stirnfläche des stabförmigen Heizelements (36) angeordnet sind.

2. Gasmeßfühler nach Anspruch 1, dadurch gekennzeichnet, daß die weiteren flächenhaften Anschlußbereiche (40, 40') des stabförmigen Heizelementes (36) und der flächenhafte zweite Anschlußbereich (49), welcher mit der Bezugselektrode (30) des Sensorelementes (24) elektrisch in Verbindung steht, im wesentlichen in der gleichen Ebene liegen.

3. Gasmeßfühler nach Anspruch 1 oder 2, dadurch gekennzeichnet, daß zwischen dem flächenhaften Anschlußbereich (32) der Bezugselektrode (30) auf dem Sensorelement (24) und dem flächenhaften ersten Anschlußbereich (47) auf dem stabförmigen Heizelement (36) ein bevorzugt koaxial das stabförmige Heizelement (36) umfassendes, elektrisches Verbindungselement (44) angeordnet ist, welches aber gegenüber den Leiterbahnen (38) und den weiteren flächenhaften Anschlußbereichen (40, 40') des Heizelementes (36) elektrisch isoliert ist.

4. Gasmeßfühler nach einem der Ansprüche 2 bis 3, dadurch gekennzeichnet, daß auf den flächenhaften Anschlußbereichen (40, 40', 49), die auf der von der Meßseite des Gasmeßfühlers (10) wegweisenden Stirnfläche (39) des Heizelementes (36) angeordnet sind, elektrische Verbindungsteile (57) fest aufliegen, die mit dem Anschlußkabel (63) elektrisch in Verbindung stehen.

5. Gasmeßfühler nach Anspruch 4, dadurch gekennzeichnet, daß die elektrischen Verbindungsteile (57) mittels eines Federelementes (54) gegen die flächenhaften Anschlußbereiche (40, 40', 49) gedrückt werden, wobei zwischen dem Federelement (54) und den elektrischen Verbindungsteilen (57) ein elektrisches Isolierteil (50) angeordnet ist.

6. Gasmeßfühler nach Anspruch 5, dadurch gekennzeichnet, daß das Isolierteil (50) längs verlaufende Bohrungen (59) hat, durch welche mit den elektrischen Verbindungsteilen (57) elektrisch verbundene Leiterdrähte (58) entlang führen.

7. Gasmeßfühler nach Anspruch 5 oder 6, dadurch gekennzeichnet, daß das Federelement (54) einerseits an der Innenseite des meßgasfernen Bodens (18) der am Gehäuse (11) festgelegten Verschlußhülse (17) und andererseits auf einer Schulter (55) des Isolierteiles (50) anliegt und dabei unter mechanischer Vorspannung steht.

8. Gasmeßfühler nach einem der Ansprüche 1 bis 6, dadurch gekennzeichnet, daß das stabförmige, elektrische Heizelement (36) eine axial verlaufende Bohrung (41), bevorzugt eine Durchgangsbohrung hat.

9. Gasmeßfühler nach einem der Ansprüche 1 bis 8, dadurch gekennzeichnet, daß das Sensorelement (24) ein meßgasseits mit dem Boden (27) verschlossenes, sauerstoffionenleitendes Festelektrolytrohr (26) hat, das auf seiner Außenseite eine dem Meßgas ausgesetzte, schichtförmige, gasdurchlässige und bevorzugt mit einer zusätzlichen gasdurchlässigen Schicht versehene Meßelektrode (28) und auf seiner Innenseite die einem Referenzgas ausgesetzte, gasdurchlässige und schichtförmige Bezugselektrode (30) trägt und das Festelektrolytrohr (26) in seinem Innenraum (29) den meßgasseitigen Abschnitt vom stabförmigen Heizelement (36) enthält.

**Claims**

1. Gas sensor, especially a gas sensor (10) for determining the oxygen content in exhaust gases of internal-combustion engines, with a housing (11), which possesses fastening means (12, 13) for installing it in a measuring-gas line and also has a preferably sleeve-shaped closing part (17) in its end portion distant from the measuring gas, and which has a longitudinal bore (21) which, by means of its end portion located on the same side as the measuring gas, surrounds firmly and sealingly at least one longitudinal portion of a tubular sensor element (24) closed by means of a bottom (27) on the same side as the measuring gas, a bar-shaped electrical heating element (36) being arranged in the interior of the sensor element (24), and at least one sheet-like connection region (32) of a reference electrode (30) being located on an end face (31) of the sensor element (24) which end face faces away from the measuring side of the gas sensor (10), the sheet-like connection region (32) of the reference electrode (30) and the bar-shaped heating element (36) being connected electrically to a connecting cable (63) attached to the gas sensor (10) on the side distant from the measuring gas, characterized in that the bar-shaped electrical heating element (36), in the region of its end portion distant from the measuring gas, has a step (46) pointing towards the measuring side of the gas sensor (10) and having a first sheet-like connection region (47) which is pressed directly or indirectly onto the at least one sheet-like connection region (32) of the reference electrode (30) on the end face (31) of the sensor element (24) distant from the measuring gas and is consequently connected electrically to the latter, in that the first sheet-like connection region (47) located on the heating element (36) is connected electrically, via a conductor track (48), to a second sheet-like connection region (49) arranged on an end face (39) of the bar-shaped heating element (36) which end face points away from the measuring side of the gas sensor (10), and in that further sheet-like connection regions (40, 40'), of the bar-shaped electrical heating element (36) are arranged on at least one end face of the bar-shaped heating element (36) which end face points away from the measuring side of the gas sensor (10).

2. Gas sensor according to Claim 1, characterized in that the further sheet-like connection regions (40, 40') of the bar-shaped heating element (36) and the sheet-like second connection region (49) connected electrically to the reference electrode (30) of the sensor element (24) lie essentially in the same plane.

3. Gas sensor according to Claim 1 or 2, characterized in that arranged between the sheet-like connection region (32) of the reference electrode (30) on the sensor element (24) and the sheet-like first connection region (47) on the bar-shaped heating element (36) is an electrical connecting element (44) which surrounds the bar-shaped heating element (36) preferably coaxially, but which is electrically insulated from the conductor tracks (38) and the further sheet-like connection regions (40, 40') of the heating element (36).

4. Gas sensor according to one of Claims 2 and 3, characterized in that electrical connecting parts (57) connected electrically to the connecting cable (63) rest firmly on the sheet-like connection regions (40, 40', 49) arranged on that end face (39) of the heating element (36) which points away from the measuring side of the gas sensor (10).

5. Gas sensor according to Claim 4, characterized in that the electrical connecting parts (57) are pressed against the sheet-like connection regions (40, 40', 49) by means of a spring element (54), an electrical insulation part (50) being arranged between the spring element (54) and the electrical connecting parts (57).

6. Gas sensor according to Claim 5, characterized in that the insulation part (50) has longitudinally extending bores (59), through which conductor wires (58) connected electrically to the electrical connecting parts (57) are guided along.

7. Gas sensor according to Claim 5 or 6, characterized in that the spring element (54) rests on one side against the inner face of the bottom (18), distant from the measuring gas, of the closing sleeve (17) fixed to the housing (11) and on the other side on a shoulder (55) of the insulation part (50) and at the same time is under mechanical prestress.

8. Gas sensor according to one of Claims 1 to 6, characterized in that the bar-shaped electrical heating element (36) has an axially extending bore (41), preferably a through-bore.

9. Gas sensor according to one of Claims 1 to 8, characterized in that the sensor element (24) has a solid electrolyte tube (26) conducting oxygen ions, which is closed by means of the bottom (27) on the same side as the measuring gas and which carries, on its outer face, a layer-shaped gas-permeable measuring electrode (28) exposed to the measuring gas and preferably provided with an additional gas-permeable layer and, on its inner face, the gas-permeable layer-shaped reference electrode (30) exposed to a reference gas, and the solid electrolyte tube (26) contains in its interior (29) the portion of the bar-shaped heating element (36) located on the same side as the measuring gas.

**Revendications**

1. Détecteur pour mesure relative au gaz, en particulier détecteur (10) pour déterminer la teneur en oxygène dans les gaz d'échappement des moteurs à combustion interne, comportant un carter (11), qui possède des moyens de fixation (12, 13) pour son montage dans une conduite de gaz objet de la mesure, qui présente, en outre, à sa portion d'extrémité éloignée du gaz objet de la mesure une pièce de fermeture (17) de préférence sous forme de douille et qui possède un alésage longitudinal (21) qui, par sa portion d'extrémité côté du gaz objet de la mesure, entoure solidement et de façon étanche au moins une portion longitudinale d'un élément détecteur (24) de forme tubulaire, fermé côté gaz objet de la mesure par un fond (27) ; étant précisé que, dans l'espace intérieur de l'élément détecteur (24), est disposé un élément chauffant électrique (36) en forme de barreau et se trouve au moins une sonde de raccordement plate (32) d'une électrode de référence (30) sur une surface frontale (31) de l'élément détecteur (24) qui est opposée au côté mesure du détecteur pour mesure relative au gaz (10) ; étant précisé que la zone de raccordement plate (32) de l'électrode de référence (30) comme également l'élément chauffant en forme de barreau (36) sont en liaison électrique avec un câble de raccordement (63) rapporté sur le détecteur pour mesure relative au gaz, côté éloigné du gaz objet de la mesure, caractérisé en ce que l'élément chauffant électrique en forme de barreau (36) présente, dans la zone de sa portion d'extrémité éloignée du gaz objet de la mesure, un décrochement (46) qui est dirigé vers le côté mesure du détecteur pour mesure relative au gaz (10) et présente une première zone de raccordement plate (47) qui est imprimée, directement ou indirectement, sur la zone de raccordement (32) plate, dont il y a au moins une, de l'électrode de référence (30) avec la surface frontale (31), côté éloigné du gaz objet de la mesure, de l'élément détecteur (24) et est donc électriquement relié avec cet élément détecteur ; et en ce que la première zone de raccordement plate (47) qui se trouve sur l'élément chauffant (36) est électriquement reliée, par l'intermédiaire d'un ruban conducteur (48), avec une seconde zone de raccordement plate (49) qui est disposée sur une surface frontale (39), côté éloigné du côté mesure du détecteur pour mesure relative au gaz (10), de l'élément chauffant en forme de barreau (36), et en ce que d'autres zones de raccordement plates (40, 40') de l'élément chauffant électrique en forme de barreau (36) sont disposées sur au moins une surface frontale, côté éloigné du côté mesure du détecteur pour mesure relative au gaz (10), de l'élément chauffant en forme de barreau (36).

2. Détecteur pour mesure relative au gaz selon la revendication 1, caractérisé en ce que les autres zones de raccordement plates (40, 40') de l'élément chauffant en forme de barreau (36) et la seconde zone de raccordement plate (49) qui est électriquement reliée à l'électrode de référence (30) de l'élément détecteur (24) se trouvent sensiblement dans le même plan.

3. Détecteur pour mesure relative au gaz selon la revendication 1 ou 2, caractérisé en ce qu'entre la zone de raccordement plate (32) de l'électrode de référence (30) avec l'élément détecteur (24) et la première zone de raccordement plate (47) avec l'élément chauffant en forme de barreau (36) est disposé un élément de liaison électrique (44) qui entoure, de préférence coaxialement, l'élément chauffant en forme de barreau (36), mais qui est électriquement isolé par rapport aux rubans conducteurs (38) et aux autres zones de raccordement plates (40, 40') et l'élément chauffant (36).

4. Détecteur pour mesure relative au gaz selon l'une des revendications 2 à 3, caractérisé en ce que, sur les zones de raccordement plates (40, 40', 49) qui sont disposées sur la surface frontale (39), côté éloigné du côté mesure du détecteur pour mesure relative au gaz (10), de l'élément chauffant (36), reposent fermement des pièces électriques de liaison (57) qui sont en liaison électrique avec le câble de raccordement (63).

5. Détecteur pour mesure relative au gaz selon la revendication 4, caractérisé en ce que les pièces de liaison électrique (57) sont poussées par un élément formant ressort (54) en direction des zones de raccordement plates (40, 40', 49), étant précisé qu'entre l'élément formant ressort (54) et les pièces de liaison électrique (57) est disposée une pièce électriquement isolante (50).

6. Détecteur pour mesure relative au gaz selon la revendication 5, caractérisé en ce que la pièce isolante (50) présente des alésages (59) qui courent longitudinalement et à travers lesquels passent des fils conducteurs (58) électriquement reliés aux pièces de liaison électrique (57).

7. Détecteur pour mesure relative au gaz selon la revendication 5 ou 6, caractérisé en ce que l'élément formant ressort (54) s'appuie, d'une part, contre la face intérieure du fond (18) de la douille de fermeture (17) disposée sur le carter (11) et, d'autre part, sur un épaulement (55) de la pièce isolante (50) et se tient donc sous précontrainte mécanique.

8. Détecteur pour mesure relative au gaz selon l'une des revendications 1 à 6, caractérisé en ce que l'élément chauffant électrique en forme de barreau (36) présente un alésage (41) qui court axialement, de préférence un alésage traversant.

9. Détecteur pour mesure relative au gaz selon l'une des revendications 1 à 8, caractérisé en ce que l'élément détecteur (24) comporte un tube en électrolyte solide qui est conducteur des ions oxygène, qui est fermé, côté gaz objet de la mesure, par le fond (27), qui porte sur sa face extérieure une électrode de mesure (28) exposée au gaz objet de la mesure, en forme de couche, perméable au gaz et de préférence avec une couche perméable au gaz supplémentaire et, sur sa face intérieure, l'électrode de référence (30) en forme de couche, perméable au gaz et exposée à un gaz de référence ; et en ce que le tube en électrolyte solide (26) contient dans son espace intérieur (29) la portion, côté gaz objet de la mesure, de l'élément chauffant en forme de barreau (36).

FIG.1

FIG. 2